(19) Europäisches Patentamt
European Patent Office
Office européen des brevets

(11) EP 1 573 980 B1

(12) **EUROPEAN PATENT SPECIFICATION**

(45) Date of publication and mention of the grant of the patent:
**07.02.2007 Bulletin 2007/06**

(21) Application number: **03777051.8**

(22) Date of filing: **04.12.2003**

(51) Int Cl.:
***H04L 12/56*** *(2006.01)*

(86) International application number:
**PCT/IB2003/005800**

(87) International publication number:
**WO 2004/057811 (08.07.2004 Gazette 2004/28)**

(54) **TRAFFIC CHANNEL SCHEDULING**

VERKEHRSKANALSZUTEILUNG

ORDONNANCEMENT DU TRAFIC DANS LES CANAUX

(84) Designated Contracting States:
**AT BE BG CH CY CZ DE DK EE ES FI FR GB GR HU IE IT LI LU MC NL PT RO SE SI SK TR**

(30) Priority: **19.12.2002 US 322789**

(43) Date of publication of application:
**14.09.2005 Bulletin 2005/37**

(73) Proprietor: **Nokia Corporation**
**02150 Espoo (FI)**

(72) Inventor: **MATTILA, Petri, To**
**FIN-01360 Vantaa (FI)**

(74) Representative: **Williams, David John et al**
**Page White & Farrer**
**Bedford House**
**John Street**
**London, WC1N 2BF (GB)**

(56) References cited:
**EP-A- 1 225 734**
**WO-A-00/41542**
**WO-A-01/63856**

EP 1 573 980 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

The present invention relates to the scheduling of traffic channel flows, and particularly but not exclusively to radio resource scheduling in mobile communication systems. An example of such a mobile communication system is enhanced general packet radio service (EGPRS).

### Background to the Invention

In mobile radio communication systems, such as the enhanced general packet radio service (EGPRS) there is a requirement for radio resource scheduling in the packet data traffic channel. Established algorithms for radio resource scheduling in EGPRS include weighted round-robin (WRR) and deficient round-robin (DRR).

Any radio resource scheduling must fulfill various requirements to be compatible with traffic flow specifications defined by the mobile communication system. In most cases, different traffic classes are specified with four parameters: priority; throughput; average delay; and delay jitter (variation of delay).

Wireless communication channels, such as in EGPRS, offer limitations that must be taken into account in designing the system. Examples of limitations are fast capacity variations due to bit errors, different coding schemes, or multi-slot capability. The radio resource use for signalling must always pre-empt a data transfer. Long pauses in the data transfer may be caused during cell reselections. Unnecessary retransmissions need to be avoided. Fixed transmission turns for data may be necessary due to polling requirements.

In general, all these limitations increase the network generated burstiness of the data flow. A scheduler which handles the scheduling of traffic channels should ideally try to provide a predictable service to the various data flows. However this is difficult due to network throughput and delay variation, and burstiness.

If the traffic is already bursty on arrival, and the burstiness is generated by the EGPRS core network, then ideally the scheduler may attempt to smooth the traffic to some extent. This is especially important with TCP/IP (transmission control protocol/internet protocol), because maximum throughput is achieved only when the windowing in the TCP works optimally, which requires nearly constant service in terms of throughput and delay.

In addition, most network protocols have an implicit minimum throughput requirement that must be provided by the network in order to make the protocol work. Thus, the scheduler should ideally provide guaranteed throughput for all traffic flows. This guarantee can in practice be very small, near to the minimum limit. If the connection cannot be provided with service that is good enough for the protocol to work, then the connection is not useful to consume resources for signalling the connection open, because it would be dropped.

WO 01/24428 discloses hierarchical prioritised round-robin scheduling technique. Token bucket rate classifiers are used to mark each individual packet as conforming or not conforming to a traffic specification for the flow.

It is an object of the present invention to provide an improved technique for scheduling channels, which addresses one or all of the above-identified problems.

EP 1,255,734 discloses a system and method for allocating excess and deficit bandwidth amongst a plurality of queues in a multiple access system.

### Summary of the Invention

According to one embodiment of the present invention, there is provided a method of scheduling a plurality of input flows to an output flow comprising:

> allocating a flow level to each input flow the flow level indicating whether the current scheduling of that input flow is sufficient to meet a necessary throughput for that input flow; and scheduling an input flow for which the respective flow level indicates a throughput of less than the necessary throughput;

characterised in that:

> the step of allocating a flow level to each input flow includes allocating a threshold value (606) for each input flow, the threshold value being set such that the flow level exceeding the threshold value indicates that the necessary throughput is not being met.

The output flow may be divided into time-slots, the method further comprising: determining the time-slot of an input flow; and scheduling those input flows having data to be transmitted in the current output flow time-slot.

The input flows may be associated with a predetermined sequence, such that if more than one input flow has a respective flow level indicating a throughput less than a necessary throughput, each such input flow is scheduled in sequence.

A scheduled input flow may be moved to the end of the sequence.

The method may further comprise the step of allocating a priority to each input flow; the step of scheduling an input flow being further dependent on the priority allocated to an input flow.

The method may further comprise the step of allocating a priority to each input flow, wherein a scheduled input flow is moved to the end of the sequence of flows having the same priority.

An input flow may have the highest priority is scheduled ahead of any other input flow.

If more than one input flow has the same priority, the input flows are scheduled in sequence.

The step of allocating a flow level to each input flow may include allocating a threshold value for each input flow, the threshold value being set such that the flow level exceeding the threshold value indicates that the necessary throughput is not being met. The threshold value may be zero.

In an initial step the scheduling may comprise increasing the flow level of each input flow by a respective predetermined amount.

If the flow level of all input flows indicates that the current throughput is more than the required guaranteed throughput for the respective input flow, the flow level for each input flow may be increased by a respective predetermined amount.

The flow level for each input flow may be associated with a maximum flow level, wherein the flow level is not allowed to exceed the maximum flow level.

The method may further comprise the step of, responsive to the scheduling of an input flow, decreasing the flow level associated with that input flow.

The flow level may be decreased by an amount corresponding to the number of bits scheduled.

The flow level for each input flow may be associated with a minimum flow level, wherein the flow level is not allowed to exceed the minimum flow level.

According to the present invention, there is also provided a scheduler for scheduling a plurality of input flows to an output flow comprising:

means for allocating a flow level to each input flow, the flow level indicating whether the current scheduling of that input flow is sufficient to meet a necessary throughput for that input flow; and
means for scheduling an input flow for which the respective flow level indicates a throughput of less than the necessary throughput;

characterised in that:

the means for allocating a flow level to each input flow includes means for allocating a threshold value for each input flow, the threshold value being set such that if the flow level exceeds the threshold value the necessary throughput is not being met.

In an initial step, the flow level for each input flow may be increased by a first predetermined value.

The method may further include the step of determining a priority for each input flow, wherein if a plurality of input flows have a flow value above their respective threshold value the one having the highest priority is schedule.

A scheduled input flow may be moved to the end of the sequence.

A method may further comprise the step of allocating a priority to each input flow, wherein a schedule input flow is moved to the end of the sequence of flows having the same priority.

An input flow may be scheduled further in dependence on the input flow being permitted to transmit data.

If no input flow has a flow level above its threshold level, the flow level for each input flow may be increased by a second predetermined amount.

According to a further aspect of the present invention there is provided a method of scheduling a plurality of input flows to an output flow, comprising: allocating to each input flow a flow level and a threshold value, the flow level being indicative of the number of bits to be scheduled from the input flow, wherein the value of the flow level relative to the threshold value indicates whether the current scheduling of that input flow is sufficient to meet a necessary throughput for that input flow; increasing the value of each flow level by a predetermined amount; and selecting the input flow to be scheduled in dependence on the flow having a highest priority of those flows having a flow level greater than the respective threshold level, wherein if no input flows have a flow level above the respective threshold level, the flow level for each input flow having data to transmit is increased by a second predetermined value.

The present invention still further provides a scheduler for scheduling a plurality of input flows to an output flow comprising: means for allocating a flow level to each input flow, the flow level indicating whether the current scheduling of that input flow is sufficient to meet a necessary throughput for that input flow; and means for scheduling an input flow for which the respective flow level indicates a throughput of less than the necessary throughput.

The scheduler may further comprise means for determining if an input flow has data to be transmitted; wherein the scheduling means is adapted to schedule only those input flows having data to be transmitted.

The input flows may be associated with a predetermined sequence, the scheduling means being adapted such that if more than one input flow has a respective flow level indicating a throughput of less than a necessary throughput, each such input flow is scheduled in sequence.

A scheduled input flow may be moved to the end of the sequence.

A priority may be associated with each input flow; the scheduler being adapted to schedule an input flow in dependence on the priority allocated to an input flow.

The scheduler may further be adapted to allocate a priority to each input flow, wherein a scheduled input flow is moved to the end of the sequence of flows having the same priority.

The means for allocating a flow level to each input flow may include means for allocating a threshold value for each input flow, the threshold value being set such that if the flow level exceeds the threshold value the necessary throughput is not being met.

The scheduling means may increase the flow level of each input flow by a respective predetermined amount prior to scheduling.

The scheduler may further include means for increasing the flow level for each input flow by a second predetermined amount if the flow level of all input flows indicates that the current throughput is more than the required guaranteed throughput for the respective input flow.

The scheduler may further include means, responsive to the scheduling of an input flow, for decreasing the flow level associated with that input flow.

According to a further aspect the invention provides a scheduler for scheduling a plurality of input flows to an output flow, comprising: means for allocating to each input flow a flow level and a threshold value, the flow level being indicative of the number of bits to be scheduled from the input flow, wherein the value of the flow level relative to the threshold value indicates whether the current scheduling of that input flow is sufficient to meet a necessary throughput for that input flow; means for determining if the flow level of an input flow is above its respective threshold value, and if the flow level is above its respective threshold value, means for scheduling that input flow, and reducing the flow level for that input flow by an amount corresponding to the number of bits scheduled.

The scheduler may further include means for increasing the flow value for each input flow by a first predetermined value.

The scheduling means may be adapted to be responsive to a priority for each input flow, wherein if a plurality of input flows have a flow value above their respective threshold value the one having the highest priority is scheduled.

According to a further aspect of the invention there is provided a scheduler for scheduling a plurality of input flows to an output flow, comprising: means for allocating to each input flow a flow level and a threshold value, the flow level being indicative of the number of bits to be scheduled from the input flow, wherein the value of the flow level relative to the threshold value indicates whether the current scheduling of that input flow is sufficient to meet a necessary throughput for that input flow; means for increasing the value of each flow level by a predetermined amount; and means for selecting the input flow to be scheduled in dependence on the flow having a highest priority of those flows having a flow level greater than the respective threshold level, wherein there is further included means for, if no input flows have a flow level above the respective threshold level, increasing the flow level for each input flow having data to transmit by a second predetermined value.

## Brief Description of the Drawings

The present invention is now described by way of reference to the figures which illustrate a particular example embodiment of the present invention, and in which:

Fig. 1 illustrates schematically the concept of a scheduler in accordance with a preferred embodiment of the present invention;

Fig. 2 illustrates a more detailed implementation of the scheduler in accordance with a preferred embodiment of the present invention;

Fig. 3 illustrates the method steps in an initialisation stage in a preferred embodiment of the present invention;

Fig. 4 illustrates the main scheduling steps in accordance with a preferred embodiment of the present invention;

Fig. 5 illustrates in more detail a particular method sequence of the embodiment of Fig. 4; and

Fig. 6 illustrates the concept of monitoring queue flow levels in accordance with a preferred embodiment of the present invention.

## Description of Preferred Embodiments

The present invention is described herein with reference to a particular nonlimiting example. One skilled in the art will appreciate that the invention is not limited to these examples, and may be more broadly applied.

In particular the present invention is described in relation to an enhanced general packet radio service (EGPRS) example implementation. As such, the description of the embodiments given herein specifically refer to terminology which is directly related to EGPRS. Such terminology is only used in the context of the presented examples, and does not limit the invention.

Referring to Fig. 1, there is illustrated the principle of the operation of the present invention. The left-hand side of Fig. 1 shows four incoming data flows. Each data flow is associated with a queue. As the described examples relate to EGPRS, a queue is referred to herein as a context. Wherever a context is referred to, it will be understood by a skilled person that in fact the description applies to any type of queue or incoming data flow.

Thus in Fig. 1, a first queue (context 1) identified by reference numeral 104a is received on a signal line 106a to a scheduler 100. A second queue (context 2) identified by reference numeral 104b is received on an input line 106b. A third queue (context 3) identified by reference numeral 104c is received on an input line 106c. More generally, an nth queue identified by "context n" and referenced as reference numeral 104n is received on an nth input line 106n to the scheduler 100.

As is conceptually illustrated in Fig. 1, each of the respective queues is associated with a queue controller. Thus the queue context 1 is associated with context controller 1 102a. The queue context 2 is associated with a context controller 2 102b. The queue context 3 is associated with a context controller 3 102c. The queue context n is associated with a context controller n 102n. In addition, the scheduler 100 is provided with a scheduler controller 108 which interfaces with all of the context controllers 102a-102n.

The scheduler 100 is further provided with a single output 110 which forms an output flow 112. The purpose of the scheduler is to control each of the input queues on the inputs 106a-106n such that they are presented on the single output 110. The implementation of the scheduling in accordance with the preferred embodiments of the present invention is described in further detail hereinafter.

A particular embodiment of the present invention is described in further detail with relation to the flow diagrams of Figs. 3-5. However in order to fully understand the preferred embodiment of the present invention, Fig. 2 illustrates in detail an example implementation of a context controller, such as context controller n 102n of Fig. 1. Fig. 2 also illustrates in detail an example implementation of the scheduler controller 108 of Fig. 1. It will be appreciated, in referring to Fig. 2, that each of the context controllers 102a-102n is constructed similarly to the context controller 102n. Similarly each of the context controllers 102a-102n interfaces with a scheduler controller 108 in a similar manner to that described in relation to the context controller n 102n in Fig. 2.

The context controller n 102n includes a context control block 200, a first storage block 202, a second storage block 204, comparators 220 and 226, an incrementor 224, an adder 218 and a multiplexer 222. The context control block 200 generally controls the context controller 102n, using internal control signals 201. Thus all of the blocks illustrated in the block 102n in Fig. 2 will be operated under the control of the context control block 200.

The storage means 202 includes a set of storage locations which relate to parameters fixed for the current context. The storage means 202 includes a store 206 for storing a priority level associated with the context, a store 208 for storing a primary context quantum associated with the context, a store 210 for storing a maximum deficit associated with the context, a store 212 for storing a maximum secondary addition associated with the context, a store 211 for storing a secondary context quantum and a store 213 for storing a minimum deficit value. The storage means 204 stores parameters associated with the context which may change as the context is processed by the scheduler. The storage means 204 includes a storage location 214 for a flow level or deficit level, and a storage location 216 for a secondary addition counter.

The adder 218 receives as its two inputs the values stored in the primary context quantum 208 and the deficit level 214. The comparator 220 receives as its inputs the value stored in the maximum deficit store 210 and the output of the adder 218. The multiplexer 222 receives as its inputs the value stored in the maximum deficit store 210 and the output of the adder 218. The multiplexer 222 is controlled by the output of the comparator 220 to output one of its inputs on its output line, which forms an input to the deficit level 214 to update the value stored therein. The increment block 224 receives as its input the secondary addition counter value 216, and provides its output to the secondary addition counter value 216. The comparator 226 receives as its inputs the secondary addition counter value 216 and the maximum secondary additions value 212, and the comparator 226 forms an input to the context control block 200, on a control line 201a.

The scheduler controller 108 in accordance with a preferred embodiment includes a scheduler control block 230, a current maximum priority storage location 232, a selected context storage location 239, a multiplexer 234, a comparator 236, and a comparator 238. The scheduler control block 230 generally controls the scheduler controller 108. Control lines 229 interface the scheduler control block to various elements of the scheduler controller 108. Thus all blocks of the scheduler controller 108 operate under the control of the scheduler control block 230.

The comparator 236 receives as its inputs the priority level in storage location 206 of the context controller 102n and the current maximum priority in storage location 232. The multiplexer 234 similarly receives as its inputs the priority level in storage location 206 and the current maximum priority in storage location 232. The multiplexer 234 is controlled by the output of the comparator 236 to provide one of its two inputs as its output, which provides an updated value to the current maximum priority in storage location 232. The comparator 238 receives as an input the deficit level value in storage location 214 of the context controller 102n. The comparator 238 simply operates to compare this value to zero.

Before describing a preferred embodiment with reference to Figs. 3-5, an important principle of the present invention is first described with reference to Fig. 6. An important principle of the present invention is that the data flow from each queue, in terms of transmitted bits, is tracked. That is, a flow value for each queue is stored and maintained. As shown in Fig. 2, each of the context controllers 102 is provided with a deficit level in a storage location 214. The deficit level is an important part for implementing the present invention. Fig. 6 illustrates the principle of operation of the deficit level.

Referring to Fig. 6, reference numeral 600 generally refers to a "bucket" into which "bit quantums" are added. As discussed further hereinbelow, the content of the bucket represents the deficit level in the storage location 214.

Each bucket 600 has a "zero" level 606 at which a deficit level in the bucket is zero. The deficit level may vary above and below zero. If the deficit level varies above zero, then the queue or context associated with the bucket 600 has a lag compared to the guaranteed bit rate. In Fig. 6, a deficit level is shown at a level 604 above the zero level 606, and therefore 602 represents a lag of capacity over the guaranteed bit rate. If the deficit level is below the zero level, then the queue or context associated with the bucket 600 has a lead compared to the guaranteed bit rate. The deficit level has a maximum value 620, and a minimum value 622.

In summary, therefore, a positive deficit level (or value) means that the flow has capacity lag, i.e. it needs more capacity in order to obtain the guaranteed bit rate. A negative deficit level (or value) indicates that the flow is satisfied.

A positive deficit level, i.e. between the zero level 606 and the maximum level 620, indicates that the queue associated with the bucket 600 should be given more transmission turns in order to obtain the guaranteed bit rate. If the queue is empty, no transmission turns are granted to the queue.

In accordance with the principles of the present invention, as long as the bucket deficit value is above the zero level 606, the scheduler 100 shares the capacity of the output with that queue. As will be discussed further in detail hereinbelow, queues having the highest priority are scheduled first, followed by lower priority queues in the priority order. The guaranteed throughput for each queue is controlled by the quantum parameter, denoted by $Q_1$. The quantum parameter for each queue represents the number of bits added to the bucket 600 in an initialisation step as discussed further hereinbelow. In Fig. 6 it is assumed that the implementation is an EGPRS implementation, and that in a 20 millisecond transmission period n bits 616a-616n are added to the bucket, the n bits comprising the quantum value $Q_1$. As discussed in further detail hereinbelow, the quantum value is added to the bucket for each queue in a primary addition algorithm executed at the beginning of a transmission scheduling cycle.

The maximum deficit parameter, 620, indicates the maximum throughput lag, measured in bits. As such, the maximum deficit also defines the maximum throughput compensation time that one queue can achieve. The minimum deficit value parameter 622 defines the maximum throughput lead for the queue and is measured in bits. This parameter defines how much capacity one context can borrow from the future. The maximum deficit value is stored in the storage location 210 in the context controller 102 associated with that queue. Similarly the minimum deficit value may be stored in a similar storage location.

The context quantum $Q_1$ for a queue is stored in the context quantum storage location 208.

A secondary quantum parameter, $Q_2$, is used as described further hereinbelow when all the queues have achieved their guaranteed throughput. Residual capacity is then distributed with proportions defined by the secondary quantum values. This parameter is used in a secondary deficit update algorithm as described in further detail hereinbelow.

A maximum secondary additions parameter, $M_2$, is also defined together with the secondary quantum $Q_2$. The maximum secondary additions parameter defines the absolute maximum throughput that one context can use in one transmission, independently of its time slot allocation. The maximum secondary additions parameter is stored in a storage location 212 of the context controller.

As discussed hereinabove, each context or queue is associated with a priority level. The priority level defines the internal handling priority. During scheduling, higher priority queues or contexts are always serviced before lower priority ones. That is, scheduling is done in a strict priority order between the priority bounds. The main contribution of the priority parameter is notable in frame delays, such that frames in higher priority contexts experience lower delays. The priority for a particular queue is stored as the priority level in a storage location 206 of the context controller. For each context or queue, variable parameter values must be maintained in the storage means 204. As discussed hereinabove, the deficit level is stored in storage location 214, indicating the capacity deficit level in the bucket. The deficit value is positive when there is capacity deficit in the bucket, and vice versa.

The number of secondary additions is stored in the storage location 216. This counts the number of secondary additions for the current scheduling round. This counter is cleared during the primary update that starts the scheduling round.

The various parameters required for implementing the preferred embodiment of the present invention are preferably stored for the whole lifetime of a particular data queue or context. However this is likely to be an implementation issue. These parameters should ideally be transferred to a new transceiver during cell reselection, if possible. This is required if the capacity loss during cell reselection needs to be fully compensated for.

Referring to Fig. 3, a primary deficit update for a preferred embodiment of the present invention is now described. The primary deficit update is the initial sequence of steps carried out during the operation of the scheduler 100. One scheduling cycle occurs for every transmission period, and the primary update takes place at the beginning of that scheduling cycle.

The primary deficit update begins in a step 302. The purpose of the primary deficit update is to share capacity to queues or contexts which have data which needs to be scheduled with guaranteed throughput. In order for data in a queue to be scheduled in accordance with the present invention, it is necessary for the deficit level 214 for that queue to have a value above zero. The primary deficit update procedure carries out an initialisation of each queue, as discussed further hereinbelow.

In a first step the first context from the list of contexts is selected, as represented by steps 304. In the present example, it is assumed that this is the context 1 of Fig. 1.

In a step 306, the deficit level 214 for the context is increased by the primary context quantum, $Q_1$, 208.

This operation is carried out by the adder 218 which adds the values of the storage locations 208 and 214.

In a step 308 it is then determined whether the result of this addition is greater than the maximum deficit allowable. The comparator 220 carries out this operation, by comparing the output of the adder 218 with the maximum deficit value stored in the location 210. If the comparator determines that the output of the adder 218 is less than the maximum deficit value 210, then it controls the multiplexer 222 to set the output of the adder 218 as the new deficit level in the storage location 214. If the comparator 220 determines that the output of the adder exceeds the maximum deficit value, then the comparator 220 controls the multiplexer 222 to load the maximum deficit value in storage location 210 into the deficit level in storage location 214. Step 310 represents the operation of setting the deficit level 214 to the maximum deficit value 210.

After the setting of the deficit to the maximum value in step 310 the method proceeds to step 312. If there is no deficit overflow, the method proceeds directly to step 312 from step 308.

In step 312 the value of the secondary additions counter in location 216 is cleared and set to zero under control of the context control block 200. The secondary additions counter 216 is always set to zero during a primary deficit update for a particular queue.

In a step 314 the next queue or context at the input of the scheduler is processed. In a step 316 it is determined whether another queue or context exists. If a further queue or context exists, then steps 306-312 are repeated for that queue, and for all further queues at the inputs to the scheduler. If no further context exists, or if all contexts have been processed, then the method moves to step 318, and the primary deficit update is ended.

Thus in a primary deficit update the deficit level for all context or queues is increased by the context quantum, $Q_1$, for that queue. After the primary deficit update, the method moves on to the main scheduling cycle, as illustrated by Fig. 4. The scheduling cycle begins in step 400, immediately after the end of the primary deficit update process.

In a step 402, the first context or queue is selected. Again, for the purposes of example, it is assumed that the context 1 queue 104a is first selected. In a first step 404 it is determined whether the packet controller unit (not shown) of which the scheduler 100 is a part has permitted the particular queue or context selected to send data. If the context or queue is not permitted to send data, then the process jumps to step 412. If the queue or context is permitted to send data, then the process proceeds to step 406.

In step 406 the priority level of the selected context or queue is compared to a previous priority level maximum. The scheduler controller 108 reads the priority for the current context from the priority level in storage location 206 and reads the current maximum priority from the storage location 232, and compares them in comparator 236. For the first context, the current maximum priority 232 will be set to a predetermined value. Typically this predetermined value will represent the lowest available priority. Thus, in the present case, if it is determined that the priority of the current context is greater than the highest priority so far. The comparator 236 controls the multiplexer 234 to set the current maximum priority value 232 to be equal to the priority level 206. That is, the value in store 206 is carried to store 232. The process then moves on to step 408. If the priority in storage location 206 is equal to or lower than the current maximum priority 232, then this means that there are contexts or queues at the inputs of the scheduler which have a higher priority than the current context or queue, and as such the process moves on to step 412.

In step 408, it is determined whether the deficit level for the particular context or queue in storage location 214 is greater than zero. The scheduler controller 108 reads the deficit level from storage location 214 and provides it as an input to comparator 238, which compares the said value with zero. If the value is greater than zero, i.e. the flow has capacity lag, then the method progresses to step 410. If the deficit is not greater than zero, i.e. the flow has capacity lead, then the process moves on to step 412.

In step 410, it has now been determined that the current context has the highest priority, and that the deficit level in storage location 214 for the current context or queue is greater than zero. As such, in step 410 this particular queue or context is selected, and the priority level in storage location 206 for this particular context or queue is copied to storage location 232 and set as the current maximum priority using the multiplexer 234. The scheduler control block 230 uses one of its signals 229, 229a, to enter the identification of the current context or queue into a selected context storage location 239.

In a step 412, the next context in the list is selected. In a step 414, it is determined whether a next context actually exists. If such context exists, then the steps 404-412 are repeated for that context. If any of the next contexts have a priority level which is higher than the priority of any preceding context, then that context is selected and its identification stored in the location 239 of the scheduler controller 108. Such context or queue is only selected, however, if the deficit of such context or queue is greater than zero. Thus, the steps 404-412 are repeated for each context or queue. At the end of this sequence for each of the context or queues, the identification of the context or queue having the highest priority and having a deficit level greater than zero is stored in the storage location 239.

If in steps 404-414 it is determined that no context or queue has a deficit greater than zero, then no context will be selected and stored in the selected context storage location 239. In step 416 it is determined whether a context has been selected. If no context has been selected, because no contexts have a deficit level greater than zero, or were not allowed to transmit, then the method proceeds to perform a secondary deficit update in a step 428. The secondary deficit update 428 is described further herein with reference to Fig. 5.

If a context has been successfully selected, and this is identified in step 416, then the method proceeds to step 418. In step 418 it is determined if a new radio link control (RLC) block is to be transmitted. The transmission of a RLC block is specific to this EGPRS embodiment. More generally, it may be considered in step 418 as to whether a block of payload data is to be transmitted. If the queue or context is about to perform a transmission of an already transmitted block, i.e. a retransmission, then the step 420 is by-passed, and the deficit level is not updated.

If a newly generated RLC block is to be transmitted, then the deficit level in storage location 214 is decremented by the number of bits constituting the RLC block. This is represented by step 420.

In a step 422 the deficit limits are checked. That is, it is checked that the deficit level has not been decreased below the minimum deficit value, level 622 in Fig. 6. If the deficit level has been decreased below such value, then the deficit level is set at the minimum deficit value. The method then moves on to a step 424.

In step 424, the context or queue which has just been assigned a transmission turn is relocated to the end of the list of queues or contexts. Thus, following each scheduling step, the selected flow is always placed at the end of the flow list for the next round of scheduling. This provided round-robin scheduling within a given priority level. This round-robin functionality is especially important if the scheduler is overloaded, even for a short-time.

Then in a step 426 the scheduling step is terminated.

After the scheduling step ends in step 426, then in a new scheduling cycle a next primary deficit update is performed in accordance with the procedure of Fig. 3. Thereafter a next scheduling step is performed in accordance with the above described procedure for Fig. 4. Thus the scheduler 108 rotates between a primary deficit update for all queues or context, and the scheduling step for all queues or context.

As discussed hereinabove, if during steps 404-410 for all queues or contexts no context is selected in step 416, then a secondary deficit update 428 is performed. The secondary deficit update is now described with reference to Fig. 5.

The secondary deficit update begins in step 500. In a step 502 the first context or queue at the input to the scheduler 100 is selected. Again, it is assumed that this is the context 1 104a.

In a first step it is determined whether the secondary update has been performed for this particular context more than the value in the maximum secondary addition storage location 212. For the first iteration, the value in the secondary additions count storage location 216 will be zero. The comparator 226 operates to compare the secondary additions count value in storage location 216 with the maximum secondary additions value in storage location 212, and the output of the comparator to an input on the control line 218 to the context control block 200. If the output of the comparator 226 indicates that the secondary additions count value 216 is equal to the maximum secondary additions value 212 then the secondary deficit update for the current context or queue is abandoned, and the method proceeds to step 514.

If the secondary additions count 216 does not exceed the maximum secondary additions count 212, then the method proceeds to step 306. In step 306, the incrementor 224 increments the value of the secondary addition count 216 by one. The incrementor 224 reads in the current value of the secondary additions count and storage location 216, incremented by one, and then writes in the new value to the secondary additions count at storage location 216.

In step 508, the deficit level 214 is increased by the secondary quantum value. An adder receives the deficit level in storage location 214 and the secondary quantum value and provides a summed value on the output thereof.

In a step 510 it is determined whether the value at the output of the adder exceeds the maximum deficit value in storage location 210. If the maximum deficit value 210 is not exceeded, then a multiplexer is controlled by the output of the comparator to update the deficit level in storage location 214 with the output of the adder. The method then moves on to step 514.

If in step 510 it is determined that the output of the adder does exceed the maximum deficit value 210, then the deficit level in storage location 214 is replaced with the maximum deficit value 210, by the multiplexer 222 under control of the comparator 220. Thereafter the method proceeds to step 514.

In step 514 a further context is selected. In step 516 it is determined whether another context exists. If another context exists, then steps 504-512 are repeated for that context. If in step 516 it is determined that no further context exists, or that all contexts had been processed, then the secondary deficit update terminates in step 518. It should be noted that the secondary deficit update is only performed for those queues which have data and can transmit in the timeslot to be scheduled.

After the end of the secondary deficit update in step 518, the scheduling step of Fig. 4 proceeds to step 430, in which it is determined whether any deficit was modified during the update. That is, whether any deficit count value 214 was modified during the update. If it is determined that no count values are modified during the update, then the method proceeds to step 426 and the scheduling step ends, as there is no data to transmit, or the modification of all deficit levels was prohibited by the maximum additions limits. If it is determined that any deficit level was changed, then the method returns to step 402, and the steps 404-412 are repeated for each context or queue. Once the steps 404-412 are repeated for each context or queue, it is possible that there is still no active context or queue which has a deficit greater than zero. If this is the case, then a further secondary deficit update may be performed in step 428. If a further secondary deficit update is performed, following the steps of Fig. 5, then the secondary additions count value 216 for each queue is further updated for having such further secondary deficit update.

The method only proceeds to a primary deficit update on the beginning of a new scheduling cycle. During the primary deficit update, on a new scheduling cycle, the secondary additions counter for any queue which is processed is reset to zero.

The present invention is thus related to scheduling. Scheduling is performed before every transmission. In EGPRS, this means that scheduling is performed once every 20ms. The context, or queue, list is transmission wide. That is, the context list is associated with the transmission. The scheduling of one transmission means that the transmitting temporary block flow is selected for each time slot. The scheduling starts, as discussed herein, with a primary update. This primary update is performed once, at the beginning of the transmission scheduling cycle. Thereafter, the scheduling step is performed for each time slot, one after each other. Thus, in the EGPRS example, the scheduling step schedules eight time slots, and up to eight radio blocks may be transmitted following each scheduling cycle. That is, eight radio blocks may be transmitted between primary updates. The queues are transmission specific, but depending on the multi-slot allocation, the queues may only be active on selected time-slots within the transmission period. If the first iteration does not find a non-empty queue with deficit level value above zero, then a secondary update is performed on that time-slot. The secondary additions counter is cleared at the beginning of the transmission scheduling, and may be incremented on any time slot where the secondary update is performed. As any queue (temporary block flow) may be active on many time slots in the transmission, the check in step 404 of Figure 4 is performed. This check determines whether a queue (temporary block flow) can actually transmit on the time slot to be scheduled.

In summary, in the scheduling step described in relation to Fig. 4, a queue is selected for the output 110 of the scheduler 100 in dependence on the following rules:

1. Only data contexts are considered which have a temporary block flow on the time slot to be scheduled, and which have a deficit level above zero, and actually have data to send.
2. In that list, select those contexts that have the highest priority.
3. Select the first context in the list of the previously selected contexts.

In these rules, it can occur that all contexts have a deficit value below zero and thus do not have permission to send. This means that the time slot has capacity that is not allocated for guaranteed throughput data context. In that case, the secondary scheduling step algorithm is used, as described in relation to Fig. 5.

In summary, the secondary update step of Fig. 5 is performed when all data contexts in a time slot are satisfied, i.e. their guaranteed throughput requirements are fulfilled. This is performed according to the following rules:

1. A secondary update is performed as described in relation to Fig. 5. The secondary quantum is added to the deficit level of each active context or queue, that have their secondary additions variable parameter lower than the maximum number of variable additions allowed.
2. The secondary additions counter for the particular context or queue is incremented.
3. If the maximum additions parameter indicates that the secondary additions counter for all context or queues has reached its maximum value, then the secondary deficit update is abandoned.
4. If the secondary deficit update is abandoned, then the scheduling cycle is repeated from the start.

In the secondary update step, the maximum throughput limitation is imposed by the maximum additions parameter. It may occur that all contexts are limited by the maximum additions parameter, and then the transmission turn must be left unused, and a dummy or an idle RLC block sent in that time slot.

As has been described hereinabove, the deficit levels of all contexts are updated with a primary quantum at a fixed time in the GSM time structure, using the primary deficit update algorithm as described in relation to Fig. 3. This primary deficit update algorithm takes place at a predetermined time. In GPRS, the predetermined time is the start of a TDMA frame. The new deficit level for every context is computed with the following rules:

1. Add the quantum value to the deficit level.
2. If the deficit level is above the maximum value, set it to the maximum value.
3. Clear the secondary additions counter.

Because of the repetitive nature of the update, the guaranteed bit rate of a data context is simply the sum of primary quantum additions in one second. As the primary addition is done at the start of each scheduling cycle, it happens exactly 50 times per second in an EGPRS implementation (based on a 20ms transmission period). Thus the context guaranteed throughput is:

$$T_G = 50*Q_1 \text{ bits/s}$$

where $Q_1$ is the quantum of that context.

In the same way, the maximum throughput is:

$$T_M = 50*(Q_1 + M2*Q2) \text{ bits/s}$$

where $Q_2$ is the secondary quantum and $M_2$ is the maximum number of secondary additions.

The allowed traffic burstiness and forced smoothing is controlled by the minimum and maximum deficit values. The deficit level in the "bucket" of Fig. 6 defines how much the context has used capacity above or below the allocated throughput. For example, if the context does not use all quanta collected in the bucket, the deficit value increases, and the context can use the capacity later. Thus the maximum deficit value defines how much capacity the context can store for future use, or how many bits it can transmit without scheduler posed limitations, if it has allocated capacity for it.

In the same way, the minimum value defines the maximum penalty imposed on the context for the use of non-allocated capacity. If the context uses more capacity than allocated, the deficit value sinks below zero, and the context must wait for the deficit value to rise again above zero. This is only possible if the context is allowed to send even if the deficit is below zero. This situation happens only when other functions require data transmission, for example in EGPRS for polling and downlink power control.

The minimum and maximum deficit limits essentially define the memory property of the scheduler. As such, the effect on other flows must also be considered carefully, because too high values for maximum deficit may easily break the context isolation. However, for full compensation of cell reselections, the maximum deficit should not be too low.

During cell reselection, the scheduler variables are transferred to the new packet control unit (PCU). This requires inter-PCU communication, and as such is a preferable feature where such intercommunication is implemented.

The technique according to the present invention also preferably provides a fallback mechanism for overload situations. In such a situation, the deficit values for nearly all contexts are positive, and the scheduler serves the highest priority context in a round robin fashion, until their deficit values fall below zero. When the deficit values of the high priority contexts fall below zero, the next priority context will get round-robin service. However, admission control is preferably utilised to keep the scheduler well below the overload limit.

The preferred implementation of the present invention requires that the deficit value is updated every time when a new RLC block is generated, even when the transmission turn is forced by other blocks in the system. However the deficit is not updated after retransmissions. This is essential for the guaranteed throughput, because retransmissions do not provide throughput from the scheduler point of view. After the transmission related deficit update, the deficit value should be checked against the minimum deficit, to determine whether an underflow has happened. In that case, the deficit is set to the minimum value.

The data flow from the logical link control (LLC) queue is tracked. During retransmissions, no data is dequeued from the LLC queue and the deficit level is not decremented, keeping it above zero. Thus the context will get transmission turns until something is properly getting through to the RLC layer. This function provides indirect, yet fast, RLC level retransmission compensation.

The present invention preferably allows even for best effort context to have reasonable resource allocation. This is feasible because the channel capacity fluctuation renders the contexts with best effort service nearly useless, if the schedule does not provide absolute minimum service for those contexts. The allocation for such context can be set to the minimum value that allows the upper layer protocols to work properly.

The present invention can be preferably configured to smooth the control traffic flows. This behaviour is particularly important with the TCP/IP, which is an important upper layer protocol used with EGPRS.

The scheduler described herein may be implemented in an appropriate network element. For example, the scheduler may advantageously be implemented in a base station controller or packet controller unit, at RLC protocol level in the protocol stack. Corresponding scheduling takes place in the serving GPRS support node (SGSN) at a higher protocol stack layer.

The present invention has been described herein with reference to particular examples, and particularly with reference to an implementation in an EGPRS system. A person skilled in the art will appreciate that the invention is not limited to such an implementation. The invention is more generally applicable to any application which requires scheduling of data flows.

The skilled person will appreciate modifications to the presented embodiments and examples which allow the present invention to be implemented in alternative applications. The scope of protection afforded by the application is defined in the appended claims.

## Claims

1. A method of scheduling a plurality of input flows to an output flow comprising:

    allocating a flow level (604) to each input flow (104) the flow level indicating whether the current scheduling of that input flow is sufficient to meet a necessary throughput for that input flow; and scheduling an input flow for which the respective flow level indicates a throughput of less than the necessary throughput;

**characterised in that**:

the step of allocating a flow level to each input flow includes allocating a threshold value (606) for each input flow, the threshold value being set such that the flow level exceeding the threshold value indicates that the necessary throughput is not being met.

**2.** A method according to claim 1, further comprising the step of determining if an input flow (104) has data to be transmitted; and scheduling only those input flows having data to be transmitted.

**3.** A method according to claim 1, wherein the output flow (112) is divided into time-slots, the method further comprising:

determining the time-slot of an input flow (104) and scheduling those input flows having data to be transmitted in the current output flow time-slot.

**4.** A method according to claim 1, wherein the input flows (104) are associated with a predetermined sequence, such that if more than one input flow has a respective flow level (606) indicating a throughput less than a necessary throughput, each such input flow is scheduled in sequence.

**5.** A method according to claim 4, wherein a scheduled input flow (104) is moved to the end of the sequence.

**6.** A method according to claim 4, further comprising the step of allocating a priority to each input flow (104); the step of scheduling an input flow being further dependent on the priority allocated to an input flow.

**7.** A method according to claim 5, further comprising the step of allocating a priority to each input flow (104), wherein a scheduled input flow is moved to the end of the sequence of flows having the same priority.

**8.** A method according to claim 6, wherein an input flow (104) having the highest priority is scheduled ahead of any other input flow.

**9.** A method according to claim 6, wherein if more than one input flows (104) have the same priority, the input flows are scheduled in sequence.

**10.** A method according to any preceding claim, wherein the threshold value (606) is zero.

**11.** A method according to claim 1, wherein in an initial step, the scheduling comprises increasing the flow level (604) of each input flow by a respective predetermined amount.

**12.** A method according to claim 1, wherein if an input flow (104) has a flow level (604) above its threshold, the flow level for each input flow is increased by a respective predetermined amount.

**13.** A method according to claim 11, wherein the flow level (604) for each input flow (104) is associated with a maximum flow level, wherein the flow level is not allowed to exceed the maximum flow level.

**14.** A method according to claim 1, further comprising the step of, responsive to the scheduling of an input flow (104), decreasing the flow level (606) associated with that input flow.

**15.** A method according to claim 14. wherein the flow level (604) is decreased by an amount corresponding to the number of bits scheduled.

**16.** A method according to claim 14, wherein the flow level (604) for each input flow (104) is associated with a minimum flow level, wherein the flow level is not allowed to exceed the minimum flow level.

**17.** A method according to any previous claim, wherein the flow level of each input flow is indicative of the number of bits to be scheduled from the input flow.

**18.** A method according to claim 1, wherein an input flow (104) is scheduled further in dependence on the input flow being permitted to transmit data.

**19.** A scheduler for scheduling a plurality of input flows (104) to an output flow (112) comprising:

means for allocating a flow level (604) to each input flow, the flow level indicating whether the current scheduling of that input flow is sufficient to meet a necessary throughput for that input flow; and
means for scheduling an input flow for which the respective flow level indicates a throughput of less than the necessary throughput;

**characterised in that**:

the means for allocating a flow level to each input flow includes means for allocating a threshold value (606) for each input flow, the threshold value being set such that if the flow level exceeds the threshold value the necessary throughput is not being met.

**20.** A scheduler according to claim 19, further comprising means for determining if an input flow (104) has data to be transmitted; wherein the scheduling means is adapted to schedule only those input flows having data to be transmitted.

**21.** A scheduler according to claim 19, wherein the input flows (104) are associated with a predetermined sequence, the scheduling means being adapted such that if more than one input flow has a respective flow level (604) indicating a throughput of less than a necessary throughput, each such input flow is scheduled in sequence.

**22.** A scheduler according to claim 19, wherein a scheduled input flow (104) is moved to the end of the sequence.

**23.** A scheduler according to claim 21, wherein a priority is associated with each input flow (104); the scheduler being adapted to schedule an input flow in dependence on the priority allocated to an input flow.

**24.** A scheduler according to claim 22, further comprising the step of allocating a priority to each input flow (104), wherein a scheduled input flow is moved to the end of the sequence of flows having the same priority.

**25.** A scheduler according to claim 19, wherein the scheduling means increases the flow level (604) of each input flow (104) by a respective predetermined amount prior to scheduling.

**26.** A scheduler according to claim 19, further including means for increasing the flow level (604) for each input flow (104) by a second predetermined amount if the flow level of all input flows indicates that the current throughput is more than the required guaranteed throughput for the respective input flow.

**27.** A scheduler according to claim 19, further including means, responsive to the scheduling of an input flow (104), for decreasing the flow level (604) associated with that input flow.

**28.** A scheduler according to any of claims 19 to 27, wherein the flow level (604) for each input flow is (104) indicative of the number of bits to be scheduled from the input flow; and the scheduler comprises means for reducing the flow level for an input flow by an amount corresponding to the number of bits scheduled if that flow level is above its respective threshold value (606).

## Patentansprüche

**1.** Verfahren zur Zuteilung einer Vielzahl von Eingangsströmen zu einem Ausgangsstrom, mit Zuweisen einer Stromstufe (604) zu jedem Eingangsstrom (104), wobei die Stromstufe angibt, ob die aktuelle Zuteilung dieses Eingangsstroms zum Erfüllen eines erforderlichen Durchsatzes für diesen Eingangsstrom ausreichend ist, und Zuteilen eines Eingangsstroms, für den die jeweilige Stromstufe einen geringeren Durchsatz als den erforderlichen Durchsatz angibt,
**dadurch gekennzeichnet, dass**
der Schritt der Zuweisung einer Stromstufe zu jedem Eingangsstrom ein Zuweisen eines Schwellenwerts (606) für jeden Eingangsstrom umfasst, wobei der Schwellenwert derart eingestellt ist, dass die den Schwellenwert überschreitende Stromstufe angibt, dass der erforderliche Durchsatz nicht erfüllt wird.

**2.** Verfahren nach Anspruch 1, ferner mit dem Schritt der Bestimmung, ob ein Eingangsstroms (104) zu sendende Daten aufweist, und Zuteilen lediglich solcher Eingangsströme, die zu sendende Daten aufweisen.

**3.** Verfahren nach Anspruch 1, wobei der Ausgangsstrom (112) in Zeitschlitze eingeteilt ist, wobei das Verfahren ferner umfasst
Bestimmen des Zeitschlitzes eines Eingangsstroms (104) und Zuteilen solcher Eingangsströme mit Daten, die in dem aktuellen Ausgangsstromzeitschlitz zu senden sind.

**4.** Verfahren nach Anspruch 1, wobei die Eingangsströme (104) mit einer vorbestimmten Folge verbunden sind, so dass dann, wenn mehr als ein Eingangsstrom eine jeweilige Stromstufe (606) aufweisen, die einen geringeren Durchsatz als einen erforderlichen Durchsatz angibt, jeder derartige Eingangsstrom in Folge zugeteilt wird.

**5.** Verfahren nach Anspruch 4, wobei ein zugeteilter Eingangsstrom (104) an das Ende der Folge bewegt wird.

**6.** Verfahren nach Anspruch 4, ferner mit dem Schritt des Zuweisens einer Priorität zu jedem Eingangsstrom (104), wobei der Schritt der Zuteilung eines Eingangsstroms ferner von der einem Eingangsstrom zugewiesenen Priorität abhängt.

**7.** Verfahren nach Anspruch 5, ferner mit dem Schritt des Zuweisens einer Priorität zu jedem Eingangsstrom (104), wobei ein zugeteilter Eingangsstrom an das Ende der Folge von Strömen mit derselben Priorität bewegt wird.

**8.** Verfahren nach Anspruch 6, wobei ein Eingangsstrom (104) mit der höchsten Priorität vor jedem anderen Eingangsstrom zugeteilt wird.

**9.** Verfahren nach Anspruch 6, wobei dann, wenn mehr als ein Eingangsstrom (104) dieselbe Priorität haben, die Eingangsströme in Folge zugeteilt werden.

**10.** Verfahren nach einem der vorgehenden Ansprüche, wobei der Schwellenwert (606) null ist.

**11.** Verfahren nach Anspruch 1, wobei das Zuteilen in einem Anfangsschritt eine Erhöhung der Stromstufe (604) jedes Eingangsstroms um einen jeweiligen vorbestimmten Betrag umfasst.

**12.** Verfahren nach Anspruch 1, wobei dann, wenn ein Eingangsstrom (104) eine Stromstufe (604) über ihrem Schwellenwert aufweist, die Stromstufe für jeden Eingangsstrom um einen jeweiligen vorbestimmten Betrag erhöht wird.

**13.** Verfahren nach Anspruch 11, wobei die Stromstufe (604) für jeden Eingangsstrom (104) mit einer maximalen Stromstufe verbunden ist, wobei die Stromstufe die maximale Stromstufe nicht überschreiten darf.

**14.** Verfahren nach Anspruch 1, ferner mit dem Schritt der Verringerung der mit einem Eingangsstrom verbundenen Stromstufe (606) im Ansprechen auf die Zuteilung dieses Eingangsstroms (104).

**15.** Verfahren nach Anspruch 14, wobei die Stromstufe (604) um einen der Anzahl zugeteilter Bits entsprechenden Betrag verringert wird.

**16.** Verfahren nach Anspruch 14, wobei die Stromstufe (604) für jeden Eingangsstrom (104) mit einer minimalen Stromstufe verbunden ist, wobei die Stromstufe die minimale Stromstufe nicht überschreiten darf.

**17.** Verfahren nach einem der vorhergehenden Ansprüche, wobei die Stromstufe jedes Eingangsstroms die Anzahl an Bits angibt, die aus dem Eingangsstrom zuzuteilen sind.

**18.** Verfahren nach Anspruch 1, wobei ein Eingangsstrom (104) ferner in Abhängigkeit davon zugeteilt wird, dass der Eingangsstrom Daten senden darf.

**19.** Zuteilungsvorrichtung zum Zuteilen einer Vielzahl von Eingangsströmen (104) zu einem Ausgangsstrom (112), mit
einer Einrichtung zum Zuweisen einer Stromstufe (604) zu jedem Eingangsstrom, wobei die Stromstufe angibt, ob die aktuelle Zuteilung dieses Eingangsstroms zum Erfüllen eines erforderlichen Durchsatzes für diesen Eingangsstrom ausreicht, und
einer Einrichtung zum Zuteilen eines Eingangsstroms, für den die jeweilige Stromstufe einen geringeren Durchsatz als den erforderlichen Durchsatz angibt,
**dadurch gekennzeichnet, dass**
die Einrichtung zum Zuweisen einer Stromstufe zu jedem Eingangsstrom eine Einrichtung zum Zuweisen eines Schwellenwerts (606) für jeden Eingangsstrom umfasst, wobei der Schwellenwert derart eingestellt ist, dass dann, wenn die Stromstufe den Schwellenwert überschreitet, der erforderliche Durchsatz nicht erfüllt wird.

**20.** Zuteilungsvorrichtung nach Anspruch 19, ferner mit einer Einrichtung zur Bestimmung, ob ein Eingangsstrom (104) zu sendende Daten aufweist, wobei die Zuteilungseinrichtung zum Zuteilen lediglich solcher Eingangsströme eingerichtet ist, die zu sendende Daten aufweisen.

**21.** Zuteilungsvorrichtung nach Anspruch 19, wobei die Eingangsströme (104) mit einer vorbestimmten Folge verbunden sind, wobei die Zuteilungseinrichtung derart eingerichtet ist, dass dann, wenn mehr als ein Eingangsstrom eine jeweilige Stromstufe (604) aufweisen, die einen geringeren Durchsatz als einen erforderlichen Durchsatz angibt, jeder derartige Eingangsstrom in Folge zugeteilt wird.

**22.** Zuteilungsvorrichtung nach Anspruch 19, wobei ein zugeteilter Eingangsstrom (104) an das Ende der Folge bewegt wird.

**23.** Zuteilungsvorrichtung nach Anspruch 21, wobei eine Priorität mit jedem Eingangsstrom (104) verbunden ist, wobei die Zuteilungseinrichtung zum Zuteilen eines Eingangsstroms in Abhängigkeit von der einem Eingangsstrom zugewiesenen Priorität eingerichtet ist.

**24.** Zuteilungsvorrichtung nach Anspruch 22, ferner mit einer Einrichtung zum Zuweisen einer Priorität zu jedem Eingangsstrom (104), wobei ein zugeteilter Eingangsstrom an das Ende der Folge von Strömen mit derselben Priorität bewegt wird.

**25.** Zuteilungsvorrichtung nach Anspruch 19, wobei die Zuteilungseinrichtung die Stromstufe (604) jedes Eingangsstroms (104) um einen jeweiligen vorbestimmten Betrag vor der Zuteilung erhöht.

**26.** Zuteilungsvorrichtung nach Anspruch 19, ferner mit einer Einrichtung zum Erhöhen der Stromstufe (604) für jeden Eingangsstrom (104) um einen zweiten vorbestimmten Betrag, wenn die Stromstufe aller Eingangsströme angibt, dass der aktuelle Durchsatz höher als der erforderliche garantierte Durchsatz für den jeweiligen Eingangsstrom ist.

**27.** Zuteilungsvorrichtung nach Anspruch 19, ferner mit einer Einrichtung zum Verringern der mit einem Eingangsstrom verbundenen Stromstufe (604) im Ansprechen auf die Zuteilung dieses Eingangsstroms (104).

**28.** Zuteilungsvorrichtung nach einem der Ansprüche 19 bis 27, wobei die Stromstufe (604) für jeden Eingangsstrom (104) die Anzahl von Bits angibt, die von dem Eingangsstrom zuzuteilen sind, und die Zuteilungsvorrichtung eine Einrichtung zum Verringern der Stromstufe für einen Eingangsstrom um einen der Anzahl zugeteilter Bits entsprechenden Betrag umfasst, wenn diese Stromstufe über ihrem jeweiligen Schwellenwert (606) liegt.

## Revendications

**1.** Procédé d'ordonnancement d'une pluralité de flux d'entrée vers un flux de sortie comprenant les étapes consistant à :

allouer un niveau de flux (604) à chaque flux d'entrée (104), le niveau de flux indiquant si l'ordonnancement actuel de ce flux d'entrée est suffisant pour satisfaire un débit nécessaire pour ce flux d'entrée ; et ordonnancer un flux d'entrée pour lequel le niveau de flux respectif indique un débit inférieur au débit nécessaire ;

**caractérisé en ce que** :

l'étape consistant à allouer un niveau de flux à chaque flux d'entrée comprend l'allocation d'une valeur seuil (606) pour chaque flux d'entrée, la valeur seuil étant fixée de telle sorte que le niveau de flux excédant la valeur seuil indique que le débit nécessaire n'est pas satisfait.

**2.** Procédé selon la revendication 1, comprenant en outre l'étape consistant à déterminer si un flux d'entrée (104) comporte des données à émettre ; et à ordonnancer uniquement les flux d'entrée comportant des données à émettre.

**3.** Procédé selon la revendication 1, dans lequel le flux de sortie (112) est divisé en tranches de temps, le procédé comprenant en outre les étapes consistant à :

déterminer la tranche de temps d'un flux d'entrée (104) et à ordonnancer les flux d'entrée comportant des données à émettre dans la tranche de temps de flux de sortie actuelle.

**4.** Procédé selon la revendication 1, dans lequel les flux d'entrée (104) sont associés à une séquence prédéterminée, de telle sorte que si plus d'un flux d'entrée a un niveau de flux respectif (606) indiquant un débit inférieur à un débit nécessaire, chaque tel flux d'entrée est ordonnancé en séquence.

**5.** Procédé selon la revendication 4, dans lequel un flux d'entrée ordonnancé (104) est déplacé à la fin de la séquence.

**6.** Procédé selon la revendication 4, comprenant en outre l'étape consistant à allouer une priorité à chaque flux d'entrée (104) ; l'étape consistant à ordonnancer un flux d'entrée dépendant en outre de la priorité allouée à un flux d'entrée.

**7.** Procédé selon la revendication 5, comprenant en outre l'étape consistant à allouer une priorité à chaque flux d'entrée (104), dans lequel un flux d'entrée ordonnancé est déplacé à la fin de la séquence de flux ayant la même priorité.

**8.** Procédé selon la revendication 6, dans lequel un flux d'entrée (104) ayant la priorité la plus élevée est ordonnancé en avant de tout autre flux d'entrée.

**9.** Procédé selon la revendication 6, dans lequel si plus d'un flux d'entrée (104) a la même priorité, les flux d'entrée sont ordonnancés en séquence.

**10.** Procédé selon l'une quelconque des revendications précédentes, dans lequel la valeur seuil (606) est zéro.

**11.** Procédé selon la revendication 1, dans lequel dans une étape initiale, l'ordonnancement comprend l'augmentation du niveau de flux (604) de chaque flux d'entrée d'une quantité prédéterminée respective.

**12.** Procédé selon la revendication 1, dans lequel si un flux d'entrée (104) a un niveau de flux (604) au-dessus de son seuil, le niveau de flux pour chaque flux d'entrée est augmenté d'une quantité prédéterminée respective.

**13.** Procédé selon la revendication 11, dans lequel le niveau de flux (604) pour chaque flux d'entrée (104) est associé à un niveau de flux maximal, dans lequel le niveau de flux n'est pas laissé excéder le niveau de flux maximal.

**14.** Procédé selon la revendication 1, comprenant en outre l'étape consistant à, en réponse à l'ordonnancement d'un flux d'entrée (104), diminuer le niveau de flux (606) associé à ce flux d'entrée.

**15.** Procédé selon la revendication 14, dans lequel le niveau de flux (604) est diminué d'une quantité correspondant au nombre de bits ordonnancés.

**16.** Procédé selon la revendication 14, dans lequel le niveau de flux (604) pour chaque flux d'entrée (104) est associé à un niveau de flux minimal, dans lequel le niveau de flux n'est pas autorisé à excéder le niveau de flux minimal.

**17.** Procédé selon l'une quelconque des revendications précédentes, dans lequel le niveau de flux de chaque flux d'entrée est indicatif du nombre de bits à ordonnancer du flux d'entrée.

**18.** Procédé selon la revendication 1, dans lequel un flux d'entrée (104) est ordonnancé en outre en fonction du flux d'entrée qui est autorisé à émettre des données.

**19.** Ordonnanceur destiné à ordonnancer une pluralité de flux d'entrée (104) vers un flux de sortie (112) comprenant :

un moyen destiné à allouer un niveau de flux (604) à chaque flux d'entrée, le niveau de flux indiquant si l'ordonnancement actuel de ce flux d'entrée est suffisant pour satisfaire un débit nécessaire pour ce flux d'entrée ; et
un moyen destiné à ordonnancer un flux d'entrée pour lequel le niveau de flux respectif indique un débit inférieur au débit nécessaire ;

**caractérisé en ce que** :

le moyen destiné à allouer un niveau de flux à chaque flux d'entrée comprend un moyen destiné à allouer une valeur seuil (606) pour chaque flux d'entrée, la valeur seuil étant fixée de telle sorte que si le niveau de flux excède la valeur seuil, alors le débit nécessaire n'est pas satisfait.

**20.** Ordonnanceur selon la revendication 19, comprenant en outre un moyen destiné à déterminer si un flux d'entrée (104) comporte des données à émettre ; dans lequel le moyen d'ordonnancement est adapté pour ordonnancer uniquement les flux d'entrée comportant des données à émettre.

**21.** Ordonnanceur selon la revendication 19, dans lequel les flux d'entrée (104) sont associés à une séquence prédéterminée, le moyen d'ordonnancement étant adapté de telle sorte que si plus d'un flux d'entrée a un niveau de flux respectif (604) indiquant un débit inférieur à un débit nécessaire, chaque tel flux d'entrée est ordonnancé en séquence.

**22.** Ordonnanceur selon la revendication 19, dans lequel un flux d'entrée ordonnancé (104) est déplacé à la fin de la séquence.

**23.** Ordonnanceur selon la revendication 21, dans lequel une priorité est associée à chaque flux d'entrée (104) ; l'ordonnanceur étant adapté pour ordonnancer un flux d'entrée en fonction de la priorité allouée à un flux d'entrée.

**24.** Ordonnanceur selon la revendication 22, comprenant en outre l'étape consistant à allouer une priorité à chaque flux d'entrée (104), dans lequel un flux d'entrée ordonnancé est déplacé à la fin de la séquence de flux ayant la même priorité.

**25.** Ordonnanceur selon la revendication 19, dans lequel le moyen d'ordonnancement augmente le niveau de flux (604) de chaque flux d'entrée (104) d'une quantité prédéterminée respective avant l'ordonnancement.

**26.** Ordonnanceur selon la revendication 19, comprenant en outre un moyen destiné à augmenter le niveau de flux (604) pour chaque flux d'entrée (104) d'une seconde quantité prédéterminée si le niveau de flux de tous les flux d'entrée indique que le débit actuel est supérieur au débit garanti requis pour le flux d'entrée respectif.

**27.** Ordonnanceur selon la revendication 19, comprenant en outre un moyen, sensible à l'ordonnancement d'un flux d'entrée (104), destiné à diminuer le niveau de flux (604) associé à ce flux d'entrée.

**28.** Ordonnanceur selon l'une quelconque des revendications 19 à 27, dans lequel le niveau de flux (604) pour chaque flux d'entrée (104) est indicatif du nombre de bits à ordonnancer du flux d'entrée ; et l'ordonnanceur comprend un moyen destiné à réduire le niveau de flux pour un flux d'entrée d'une quantité correspondant au nombre de bits ordonnancés si ce niveau de flux est au-dessus de sa valeur seuil respective (606).

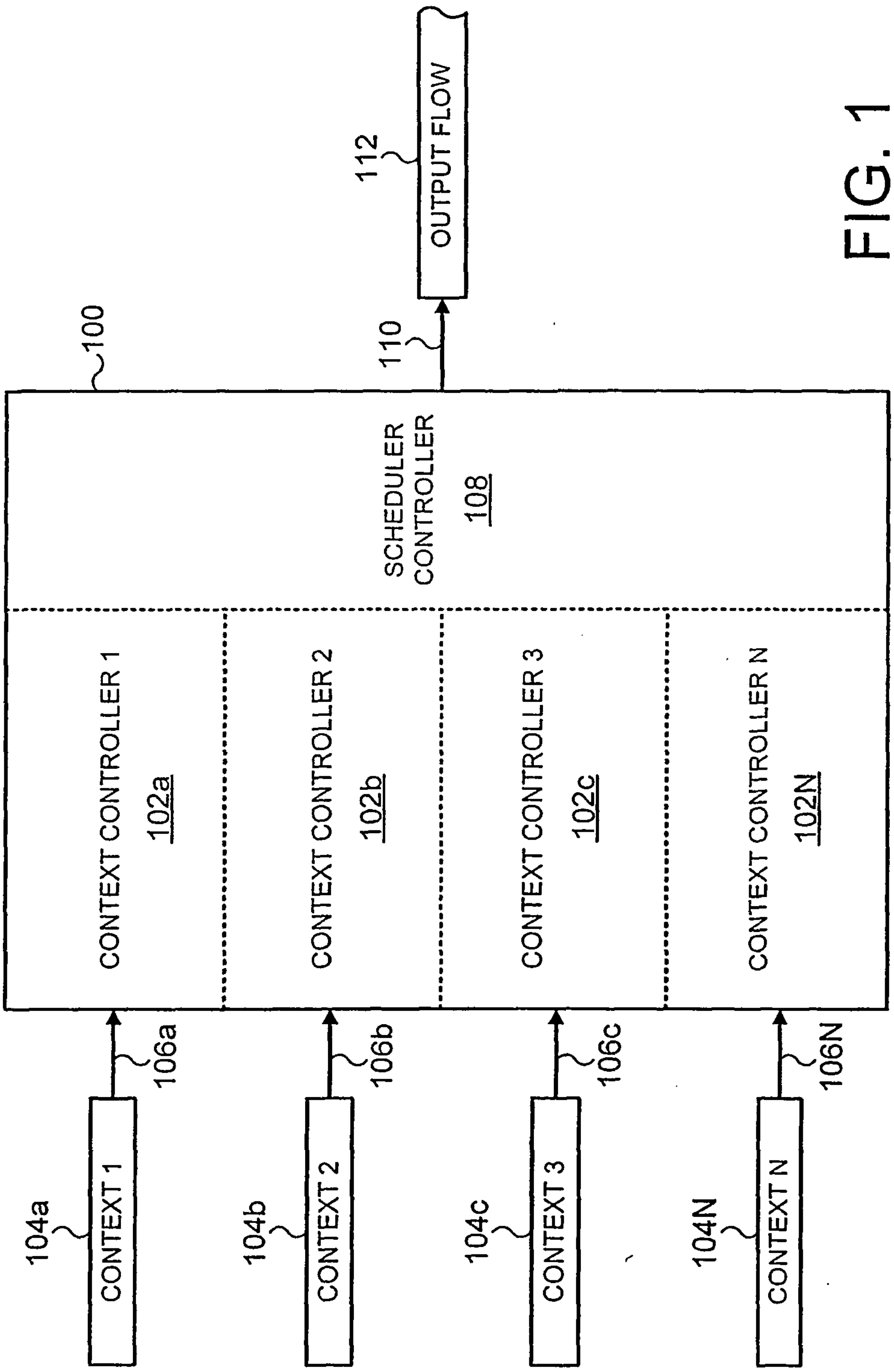
100
SCHEDULER CONTROLLER
108
110
112
OUTPUT FLOW
CONTEXT CONTROLLER 1
102a
CONTEXT CONTROLLER 2
102b
CONTEXT CONTROLLER 3
102c
CONTEXT CONTROLLER N
102N
106a
106b
106c
106N
104a
CONTEXT 1
104b
CONTEXT 2
104c
CONTEXT 3
104N
CONTEXT N

FIG. 1

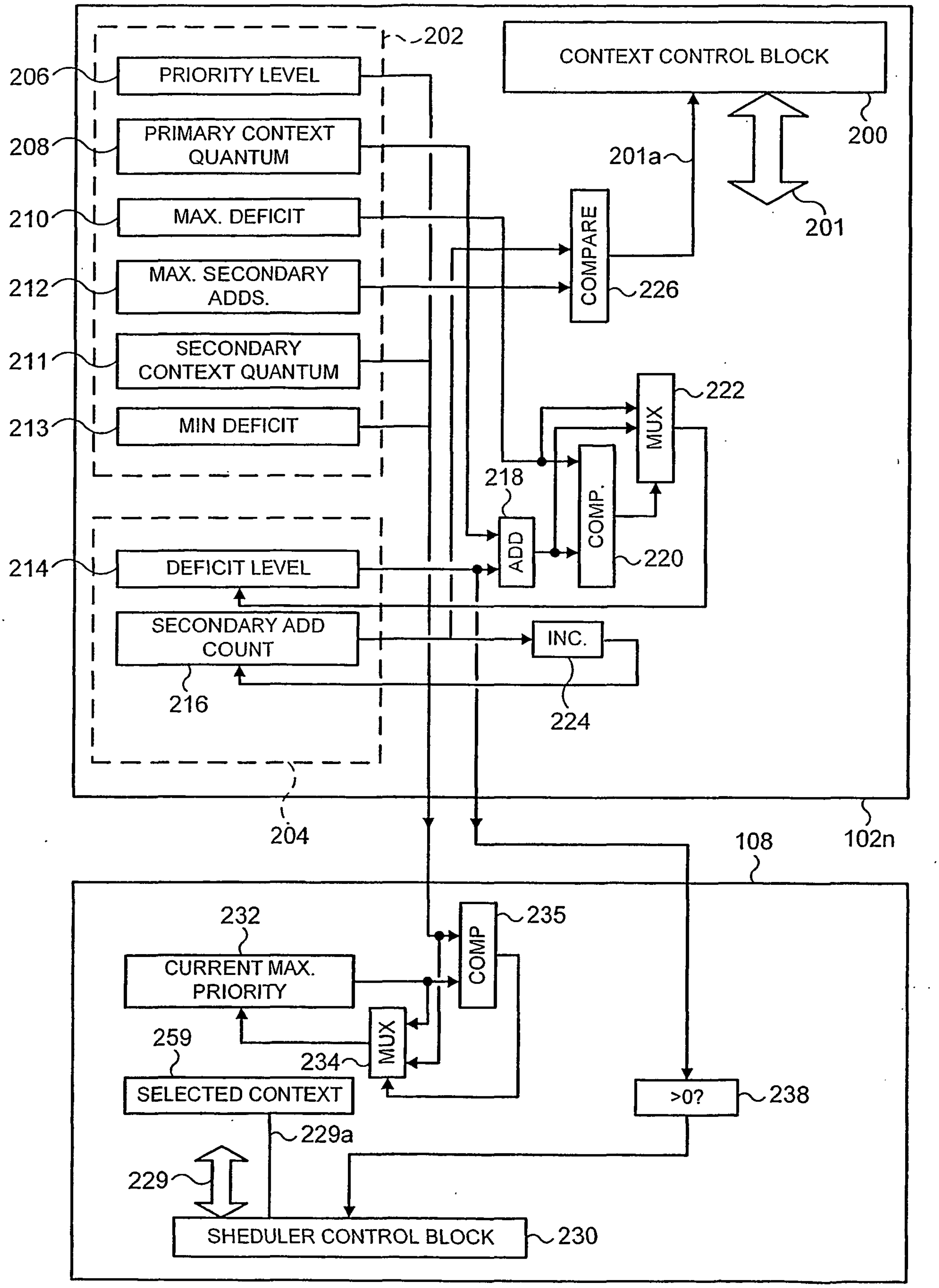
202
206
PRIORITY LEVEL
208
PRIMARY CONTEXT QUANTUM
210
MAX. DEFICIT
212
MAX. SECONDARY ADDS.
211
SECONDARY CONTEXT QUANTUM
213
MIN DEFICIT
214
DEFICIT LEVEL
SECONDARY ADD COUNT
216
204
CONTEXT CONTROL BLOCK
200
201a
201
COMPARE
226
MUX
222
218
ADD
COMP.
220
INC.
224
102n
108
232
CURRENT MAX. PRIORITY
COMP
235
259
MUX
234
SELECTED CONTEXT
229a
229
SHEDULER CONTROL BLOCK
230
>0?
238

FIG. 2

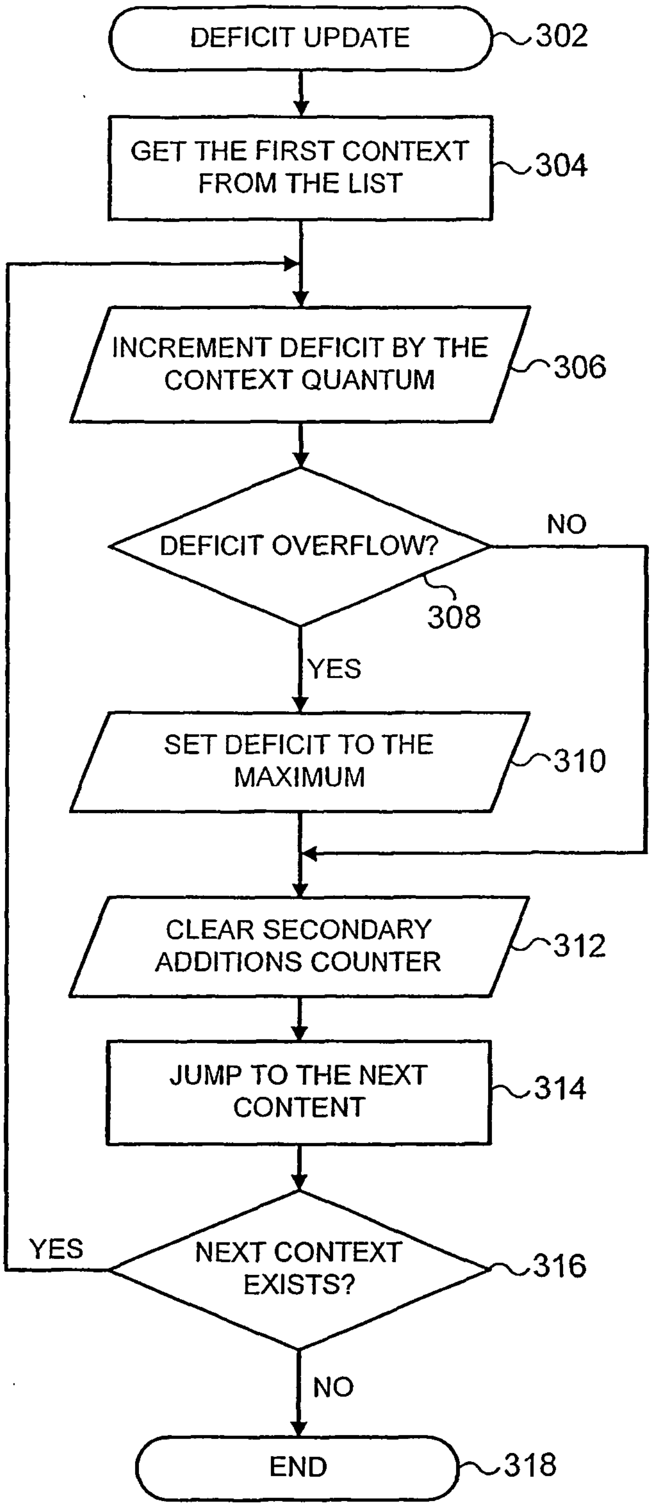
DEFICIT UPDATE
302
GET THE FIRST CONTEXT FROM THE LIST
304
INCREMENT DEFICIT BY THE CONTEXT QUANTUM
306
DEFICIT OVERFLOW?
308
NO
YES
SET DEFICIT TO THE MAXIMUM
310
CLEAR SECONDARY ADDITIONS COUNTER
312
JUMP TO THE NEXT CONTENT
314
NEXT CONTEXT EXISTS?
316
YES
NO
END
318

FIG. 3

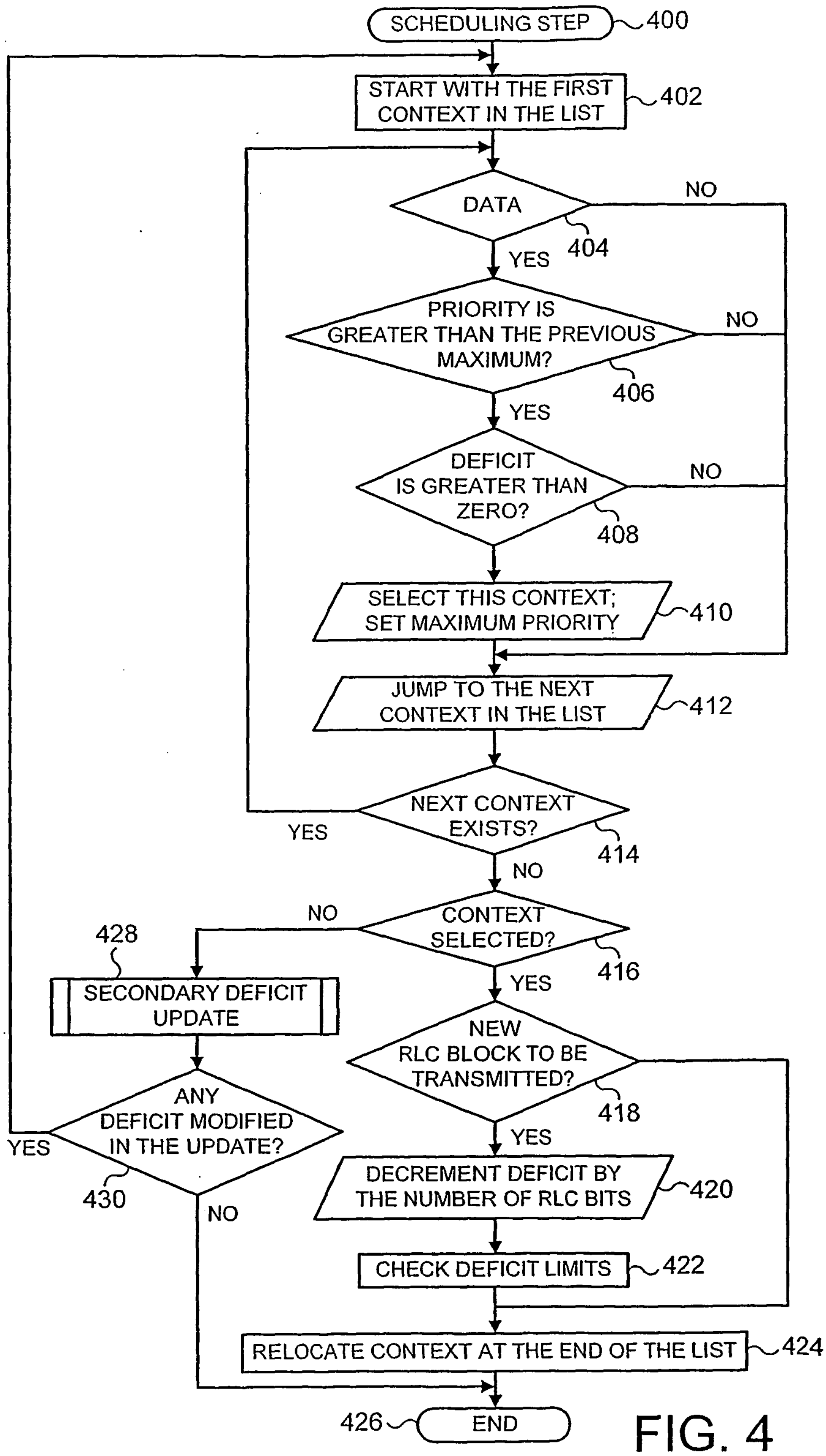
SCHEDULING STEP
400
START WITH THE FIRST CONTEXT IN THE LIST
402
DATA
404
NO
YES
PRIORITY IS GREATER THAN THE PREVIOUS MAXIMUM?
406
NO
YES
DEFICIT IS GREATER THAN ZERO?
408
NO
SELECT THIS CONTEXT; SET MAXIMUM PRIORITY
410
JUMP TO THE NEXT CONTEXT IN THE LIST
412
NEXT CONTEXT EXISTS?
414
YES
NO
CONTEXT SELECTED?
416
NO
YES
428
SECONDARY DEFICIT UPDATE
NEW RLC BLOCK TO BE TRANSMITTED?
418
YES
ANY DEFICIT MODIFIED IN THE UPDATE?
430
YES
NO
DECREMENT DEFICIT BY THE NUMBER OF RLC BITS
420
CHECK DEFICIT LIMITS
422
RELOCATE CONTEXT AT THE END OF THE LIST
424
426
END

FIG. 4

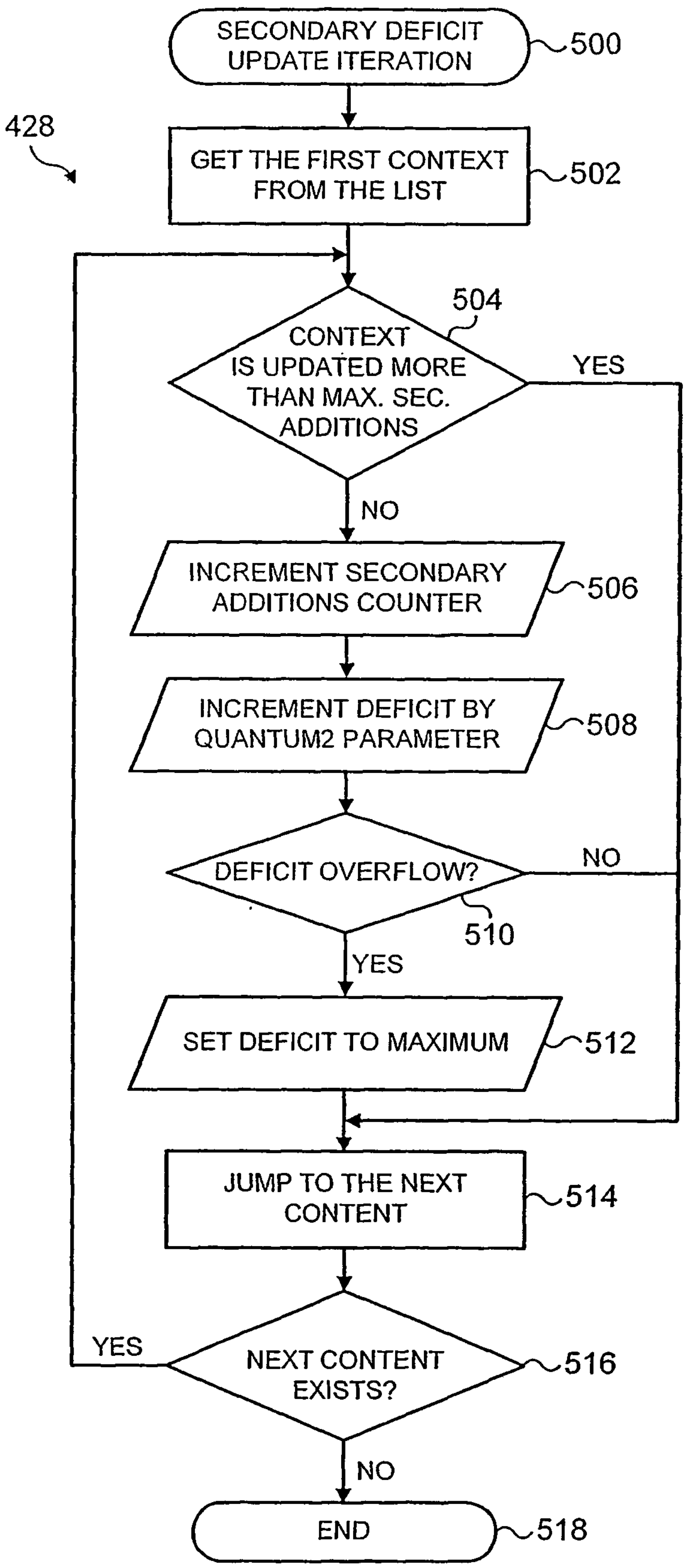
SECONDARY DEFICIT UPDATE ITERATION
500
428
GET THE FIRST CONTEXT FROM THE LIST
502
504
CONTEXT IS UPDATED MORE THAN MAX. SEC. ADDITIONS
YES
NO
INCREMENT SECONDARY ADDITIONS COUNTER
506
INCREMENT DEFICIT BY QUANTUM2 PARAMETER
508
DEFICIT OVERFLOW?
NO
510
YES
SET DEFICIT TO MAXIMUM
512
JUMP TO THE NEXT CONTENT
514
YES
NEXT CONTENT EXISTS?
516
NO
END
518

FIG. 5

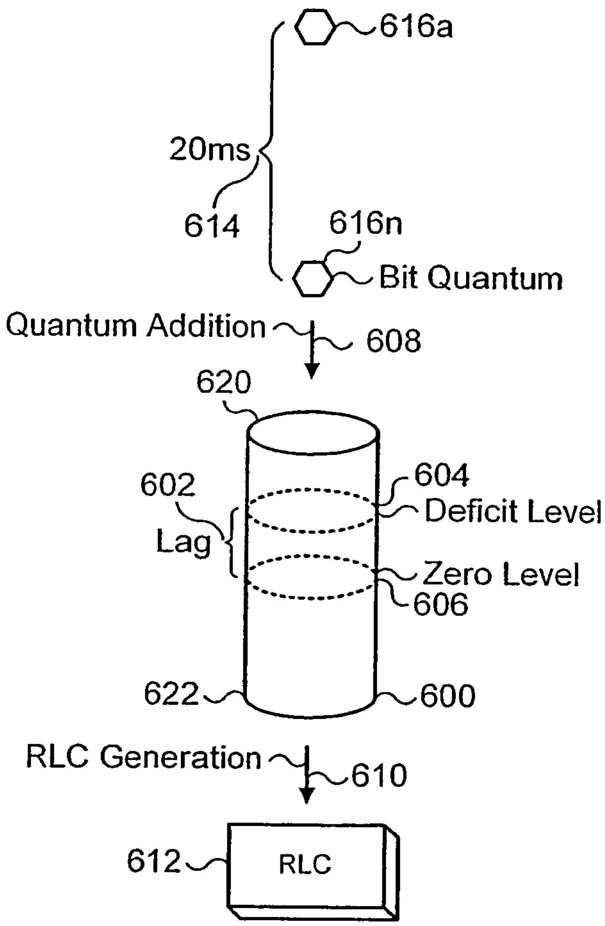
616a
20ms
614
616n
Bit Quantum
Quantum Addition
608
620
602
604
Deficit Level
Lag
Zero Level
606
622
600
RLC Generation
610
612
RLC

FIG. 6